# FASCICULE DE BREVET EUROPEEN

(11) **EP 1 463 785 B1**
(45) Date de publication et mention de la délivrance du brevet: **06.08.2008**
(21) Numéro de dépôt: 02805415.3
(22) Date de dépôt: 20.12.2002
(51) Int. Cl.: C09J 7/02

(54) **RUBAN ADHESIF RESISTANT A DES TEMPERATURES ELEVEES**
HOCHTEMPERATURBESTÄNDIGES KLEBEBAND
HIGH-TEMPERATURE RESISTANT ADHESIVE TAPE

(30) Priorité: 21.12.2001 FR 0116727
(43) Date de publication de la demande: 06.10.2004
(73) Titulaire: SCAPA FRANCE, F-01200 Bellegarde sur Valserine (FR)
(72) Inventeur: GOUX, Alain, F-01120 Nievroz (FR); GRAPOTTE, David, F-26500 Bourg les Valence (FR)
(74) Mandataire: Breese, Pierre
(86) Numéro de dépôt international: PCT/FR2002/004511
(87) Numéro de publication internationale: WO 2003/054101

(56) Documents cités:
- EP-A- 1 072 663
- WO-A-00/71634
- US-A- 5 547 766
- US-B1- 6 200 677

## Description

La présente invention a pour objet un nouveau ruban adhésif résistant à des températures élevées, utilisé comme revêtement des câbles, dans les domaines de l'industrie automobile, électrique ou électronique ou pour le revêtement de pipelines.

La protection des câbles et des pipelines est réalisée de manière traditionnelle à l'aide de rubans adhésifs, qui diffèrent les uns des autres par leurs résistances physiques, et leur résistance à la température.

Les produits les plus couramment décrits dans l'art antérieur sont des rubans adhésifs dont le support est à base de polychlorure de vinyle ou de polyoléfines telles que le polyéthylène ou le polypropylène, recouvert d'une couche d'adhésif.

Les rubans en polychlorure de vinyle (PVC) sont largement utilisés dans l'industrie automobile notamment parce qu'ils résistent bien à l'inflammation, mais ils ne résistent pas bien à des hautes températures et sont utilisés généralement dans des applications mettant en jeu des températures restant comprises entre 85 à 105 °C. De plus, les films PVC sont très sensibles aux dégradations physiques car le PVC est par nature rigide et, pour répondre à ce type d'application (ruban souple), il est généralement plastifié ; or, les plastifiants migrent dans le film, ce qui provoque une fragilisation accélérée du film et un ramollissement de l'adhésif. Par ailleurs, le PVC contient par nature des halogènes (chlore) et au cours de sa combustion lors d'une opération d'incinération, il dégage des vapeurs toxiques de dérivés chlorés qui peuvent corroder les installations de recyclage et polluer l'atmosphère. Il est de ce fait difficilement recyclable, et pour toutes ces raisons, il est souvent remplacé par d'autres polymères.

Les rubans adhésifs en polypropylène résistent bien à une température élevée, mais ils sont connus pour la faiblesse de leur résistance physique dans les autres conditions extrêmes auxquelles ils sont confrontés : notamment ces rubans se fragilisent rapidement sous les effets d'étirement, de tension ou de flexion auxquels ils sont généralement soumis.

Les rubans adhésifs en polyéthylène montrent une bonne tenue à basse température, mais résistent mal dans des applications où ils sont soumis à une température supérieure à 115°C.

La demande internationale WO00/71634 propose des rubans présentant une tenue en température de 3000 heures à 85 °C contenant un film combinant un copolymère thermoplastique éthylène/styrène avec une polyoléfine thermoplastique telle que du polyéthylène basse densité ou du polypropylène. Un interpolymère est un type de copolymère particulier dans lequel les 2 monomères (au moins 2) sont si intimement liés dans la molécule de polymère que la substance est essentiellement homogène en composition chimique. Cette structure intime ne permet toutefois qu'une résistance en température relativement faible.

La présente invention vise à fournir un ruban adhésif qui réponde simultanément à plusieurs critères, à savoir qui soit résistant à une température supérieure à 115°C, qui présente une bonne résistance physique au cours du temps et qui soit facilement recyclable.

Ce but est atteint par le ruban adhésif monocouche ou multicouche selon l'invention, qui est susceptible de conserver ses propriétés physiques à une température égale à 125 °C pendant 3000 heures et à 150 °C pendant 240 heures, comprenant une couche de support sur au moins une surface de laquelle adhère au moins une couche notamment de composition adhésive, caractérisé en ce que ladite couche de support comprend une première résine de polypropylène et/ou d'un copolymère éthylène/propylène et au moins une seconde résine polyéthylène, copolymère de l'éthylène et/ou élastomère, l'une au moins des résines de ladite couche de support étant une résine élastomère et ladite couche de support et/ou ladite composition adhésive comprennent au moins un stabilisant. De préférence, la couche de support contient au moins 60 % et de préférence de 60 à 90 %, très préférentiellement de 65 à 75 % d'une résine de polypropylène et/ou d'un copolymère éthylène/propylène.

Avantageusement, ni ladite couche de support ni ladite couche de composition adhésive ne contiennent pas de composés halogénés.

De préférence, le taux de monomère éthylène dans le copolymère éthylène/propylène utilisé pour la première résine du support est compris entre 1,5 et 50 %, de préférence entre 5 et 30 % en poids du poids.

La résine élastomère utilisée pour la seconde résine du support est une résine Styrène-Isoprène-Styrène (SIS), une résine Styrène-Ethylène-Butadiène-Styrène (SEBS), une résine Styrène-Ethylène-Butadiène (SEB), une résine Styrène-Ethylène-Butadiène-Styrène/Styrène-Ethylène-Butadiène (SEBS/SEB), une résine Styrène-Butadiène-Styrène (SBS), une résine Ethylène-Propylène-diène monomère (EPDM) et/ou une résine Caoutchouc Ethylène-Propylène (EPR).

Suivant un mode de réalisation préféré de l'invention, le stabilisant est un antioxydant primaire, utilisé seul ou en combinaison avec un antioxydant secondaire. Le ou les stabilisants utilisés dans le ruban selon l'invention sont sélectionnés sur leurs capacités à stabiliser en température la composition de l'invention, et non pour leurs propriétés anti-jaunissantes. Suivant un mode de réalisation de l'invention, les stabilisants non-jaunissants sont exclus des stabilisants choisis dans le ruban selon l'invention.

De préférence, cet antioxydant primaire est un phénol encombré et/ou une amine encombrée.

Avantageusement, l'antioxydant secondaire est une phosphite organique, une phosphinite organique, une sulfide organique ou un thiocomposé du type dialkyldithiocarbamate ou dialkyldithiophosphate, distéarylthiodipropionate ou un mélange de ceux-ci.

Suivant un mode de réalisation préféré de l'invention, le stabilisant est un phénol encombré associé à une phosphite ou à un thiocomposé.

Suivant un mode de réalisation particulier de l'invention, le stabilisant comprend en outre un antioxydant haute performance.

Suivant un autre mode de réalisation préféré de l'invention, la composition adhésive selon l'invention n'est pas un caoutchouc, naturel ou synthétique.

Suivant encore un autre mode de réalisation préféré de l'invention, ladite composition adhésive est sensible à la pression.

Avantageusement, la composition adhésive de l'invention comprend un adhésif à base acrylique ou un adhésif siliconé.

De préférence, la composition adhésive est thermofusible ou thermodurcissable.

Avantageusement, la composition adhésive est réticulable sous l'action des ultra-violets ou d'un bombardement électronique.

De préférence, la composition adhésive comprend un adhésif acrylique thermofusible réticulable sous l'action des ultra-violets du type commercialisé par la société BASF sous les noms acResin^{®} ou un adhésif en solution du type commercialisé par la société UCB sous les noms Solucryl^{®} ou du type commercialisé par la société ASHLAND sous les noms AROSET^{®} ou du type commercialisé par la société NATIONAL STARCH CHEMICAL COMPANY sous les noms DUROTAK^{®} ou un adhésif en émulsion du type commercialisé par la société UCB sous les noms Ucecryl^{®} ou du type commercialisé par la société RHOM&HAAS sous les noms Primal^{®} ou du type commercialisé par la société SOLUTIA sous les noms Gelva^{®} GME.

Suivant un mode de réalisation de l'invention, la composition adhésive est modifiée par une résine tackifiante, la teneur en résine tackifiante étant inférieure à 30 % en poids par rapport au poids de la composition adhésive, et de préférence inférieure à 20 % en poids par rapport au poids de la composition adhésive.

Avantageusement, le support et/ou la composition adhésive du ruban selon l'invention comprennent des colorants ou des pigments de préférence minéraux, de préférence du noir de carbone, de l'oxyde de zinc, de l'oxyde de magnésium ou de l'oxyde de titane et/ou des charges, de préférence du carbonate de calcium ou du talc.

De préférence, le support et/ou la composition adhésive comprennent au moins un retardateur de flamme sans halogène. De préférence, ce retardateur de flamme sans halogène est du trihydrate d'alumine, du borate de zinc, de l'hydroxyde de magnésium, un polyphosphate organique, un polyphosphate d'ammonium, et/ou un dérivé de triazine.

Suivant un mode de réalisation particulier, le ruban selon l'invention comprend, outre le support et l'adhésif, une couche primaire d'accrochage située entre le support et la couche de composition adhésive.

Avantageusement, le ruban selon l'invention comprend une couche primaire d'agent anti-adhérent sur la face du support opposée à celle enduite avec la couche primaire d'accrochage et/ou avec la ou les couches de composition adhésive.

Suivant une variante avantageuse de l'invention, l'une au moins des faces du support est soumise à un traitement de surface de type Corona entre 34 et 46 dynes/cm préalablement à l'enduction de la couche d'agent anti-adhérent, de la couche primaire d'accrochage, et/ou de la ou des couches de composition adhésive.

Suivant un mode de réalisation particulier de l'invention, l'épaisseur du ruban adhésif est comprise entre 50 et 200 microns, de préférence 60 et 180 microns et de manière encore davantage préférée entre 70 et 150 microns.

La présente invention a également pour objet l'utilisation du ruban adhésif selon l'invention dans les secteurs de l'automobile, l'électricité ou l'électronique, caractérisée en ce que l'on gaine un faisceau de fils avec le ruban adhésif de l'invention.

L'invention se comprendra mieux à la lecture de la description détaillée d'un mode particulier de réalisation suivant et des exemples qui suivent, qui illustrent non limitativement l'invention.

La dégradation des polymères constituant les supports des rubans adhésifs dans le temps est généralement due à des phénomènes d'oxydation qui dépendent d'un certain nombre de paramètres et particulièrement de la température à laquelle ces polymères sont soumis. Les étapes de dégradation mises en jeu sont principalement dues à des mécanismes radicalaires.

La présence d'une source thermique entraîne la formation dans le polymère de radicaux libres par décomposition des liaisons hydrocarbonées. En présence d'oxygène, cette décomposition est combinée à une oxydation de la liaison hydrocarbonée qui conduit à la formation de d'hydropéroxydes (phase d'amorçage de la réaction radicalaire). A partir des radicaux ainsi créés, une auto-oxydation se met en place, qui conduit à la dégradation du polymère. Certains polymères sont plus sensibles que d'autres à ce type de dégradation.

Les inventeurs ont cherché à retarder au maximum les phénomènes de dégradation thermique en cherchant à stabiliser les polymères et/ou les compositions adhésives constituant le ruban selon l'invention. Les inventeurs ont d'abord sélectionné des polymères montrant en eux-mêmes une bonne tenue à la température. Ils ont donc en premier lieu sélectionné des résines à base de polypropylène de préférence du polypropylène et/ou un copolymère éthylène/propylène montrant une bonne tenue en température. Ce copolymère peut être statistique ou sous forme de blocs de monomères.

Le polypropylène étant par nature rigide, il n'est pas susceptible en lui seul de constituer un ruban souple. Pour l'assouplir, l'invention prévoit de lui adjoindre éventuellement un copolymère éthylène/propylène, mais surtout de lui adjoindre au moins une seconde résine constituée par du polyéthylène, haute et/ou basse densité, un copolymère de l'éthylène, et/ou un élastomère, l'une des résines constituant cette couche de support étant nécessairement un élastomère. Ici encore, le copolymère peut être statistique ou en blocs.

Les copolymères de l'éthylène préférés sont le copolymère éthylène-vinylacetate (EVA), le copolymère éthylène-méthylacrylate (EMA), le copolymère éthylène-ethylacrylate (EEA) ou le copolymère éthylène-acide acrylique (EAA).

Les élastomères préférés sont les résines Styrène-Isoprène-Styrène (SIS), Styrène-Ethylène-Butadiène-Styrène (SEBS), Styrène-Ethylène-Butadiène (SEB), Styrène-Butadiène-Styrène (SBS), Ethylène-Propylène-Diène-Monomère (EPDM) et/ou Caoutchouc-Ethylène-Propylène (EPR). Un élastomère particulièrement préféré est la résine Styrène-Ethylène-Butadiène-Styrène/Styrène-Ethylène-Butadiène. (SEBS/SEB),

Toutefois, la seule présence d'une résine polypropylène et/ou copolymère éthylène/propylène et d'un polyéthylène, d'un copolymère de l'éthylène et/ou d'un élastomère ne permet pas d'atteindre le but de l'invention, notamment en ce qui concerne la résistance physique du ruban à la température sur une longue durée. C'est pourquoi le ruban selon l'invention comprend également des stabilisants, dans le support et/ou dans la composition adhésive.

Deux types principaux de stabilisants sont choisis pour retarder les phénomènes de dégradation du support et de la composition adhésive du ruban : des antioxydants primaires qui réagissent avec un certain type de radicaux libres formés lors de la phase d'amorçage de la réaction radicalaire ou issus de la décomposition des hydropéroxydes, en particulier des radicaux de type O^{•} (notamment des groupements HO^{•}, RO^{•}, et ROO^{•} dans lesquels R est un alkyle), et des antioxydants secondaires qui retardent la formation des radicaux en détruisant les hydropéroxydes lors de l'étape d'amorçage sans passer par la voie radicalaire.

Les antioxydants primaires sont des phénols encombrés ou des amines encombrés.

De préférence, les phénols encombrés sont le 2,4-t-butyl-parahydroxy-toluène, l'octadecyl-3-(3,5-di-tertiobutyl-4-hydroxyphenyl)propionate, le pentaérythritol tetrakis(3-(3,5-di-tertiobutyl-4-hydroxyphényl)propionate), le N, N'-hexane-1,6-diylbis(3-(3,5-di-tert-butyl-4-hydroxyphénylpropionamide)), le 4-6-bis(octylthiométhyl)-o-cresol, l'éthylènebis(oxyéthylène)bis-(3-(5-tert-butyl-4-hydroxy-m-tolyl)propionate), le 2,6-ditertiary butyl paracresol, le bis-[2-hydroxy-5-méthyl-3-1(1-méthylcyclohexyl)-phényl]-méthane et/ ou le 4,4'-Butyldenebis(6-tert-butyl-m-cresol).

De préférence, les amines encombrées sont le bis (2,2,6,6,-tetraméthyl-a-pipéridyl)sébacéate, ou le Poly[[6-[(1,1,3,3-tetramethylbutyl)amino]-1,3,5-triazine-2,4-diyl][(2,2,6,6-tetraméthyl-4-pipéridinyl)imino]-1,6-hexanediyl[(2,2,6,6-tetraméthyl-4-pipéridinyl)imino]].

Les antioxydants secondaires sont une phosphite organique, une phosphinite organique, une sulfide organique ou un thiocomposé du type dialkyldithiocarbamate ou dialkyldithiophosphate, distéarylthiodipropionate ou un mélange de ceux-ci.

Or, l'invention permet de démontrer un intéressant phénomène de synergie entre un antioxydant primaire et un antioxydant secondaire, lorsqu'ils sont tous les deux utilisés simultanément pour la stabilisation des polymères constituant le ruban selon l'invention. En particulier, les phosphites et les thioesters ont un effet de synergie avec les phénols encombrés.

Les inventeurs ont en effet constaté que les phénomènes de dégradation du ruban se concentraient dans une zone interfaciale au niveau du contact entre la couche de composition adhésive (ou de la couche primaire d'accrochage) et la couche de support. Les radicaux libres sont présents en plus grande quantité dans cette zone interfaciale, et les réactions de propagation conduisent rapidement à une dégradation de l'ensemble du ruban. Or, les inventeurs ont démontré que lés stabilisants sélectionnés selon l'invention, c'est-à-dire la combinaison d'un stabilisant primaire et d'un stabilisant secondaire, en particulier la combinaison d'un phénol encombré avec une phosphite ou un thiocomposé, diminue de manière drastique ces phénomènes de dégradation à température élevée. Les inventeurs ont démontré que ces stabilisants particuliers ont, dans leur application à stabiliser le support et/ou la composition adhésive du ruban selon l'invention, une double fonction : d'une part empêcher ou retarder la formation de radicaux libres, et d'autre part se coupler aux radicaux libres formés, au niveau de la zone interfaciale, pour empêcher leur propagation. Ils sont donc particulièrement efficaces et leur présence est indispensable à l'obtention du résultat recherché.

Le ruban selon l'invention peut encore comprendre, pour stabiliser son support et/ou sa composition adhésive, un antioxydant haute performance, de préférence en combinaison avec un mélange d'antioxydants tels que mentionnés précédemment. On entend par antioxydant haute performance un antioxydant intervenant pour empêcher la formation et/ou la propagation des radicaux libres de formule générale R^{•}, dans lequel R est un alkyle. L'antioxydant haute performance préféré est une lactone, la 5,7-di-t-butyl-3-(3,4-diméthylphényl)-3-H-benzofuran-2-one.

Ayant conduit leurs expériences sur une grande variété de supports et de compositions adhésives, les inventeurs ont remarqué que les adhésifs à base de caoutchouc étaient particulièrement sensibles à la thermodégradation. Ils ont également constaté, en l'absence de stabilisant, que la dégradation du caoutchouc provoquait une quantité importante de radicaux libres venant attaquer le support polypropylène et accélérant le vieillissement et la dégradation de ce support. Parce qu'ils produisent tant de radicaux libres, les caoutchoucs sont exclus des adhésifs sélectionnés pour la réalisation du ruban adhésif selon l'invention.

Au contraire, les inventeurs ont sélectionné parmi différentes familles d'adhésifs les adhésifs sensibles à la pression à base polyacrylique et les adhésifs siliconés comme étant particulièrement adaptés pour la réalisation du ruban selon l'invention. Pour la réalisation des rubans selon l'invention, qui résistent pendant une longue durée à des températures élevées, ces adhésifs sont de préférence stabilisés à l'aide des stabilisants utilisés pour les supports et ci-dessus décrits. Ces adhésifs peuvent être thermofusibles ou thermodurcissables. Ils peuvent être réticulables sous l'action des ultra-violets ou par bombardement électronique.

La composition adhésive selon l'invention peut être additionnée d'une résine tackifiante, qui augmente le pouvoir collant de l'adhésif.

Les supports et/ou les adhésifs utilisés pour réaliser un ruban adhésif selon l'invention comprennent avantageusement des colorants, des pigments et/ou des charges. Les colorants et les pigments ont notamment pour fonction de colorer adhésif et support. Un pigment préféré est le noir de carbone, particulièrement demandé pour les applications dans le secteur automobile. Les charges ont pour fonction d'augmenter le volume du support et/ou de l'adhésif dans lequel il est ajouté. A noter que certains pigments jouent le même rôle que les charges. Les pigments et les charges ont également une fonction dans la stabilisation. Le noir de carbone peut jouer lui-même le rôle d'antioxydant comme inhibiteur de radicaux libres, ou influencer l'activité d'un antioxydant en la renforçant. Ces charges et ces pigments peuvent être intégrés au niveau du support ou au niveau de la composition adhésive.

Avantageusement, le support et/ou la composition adhésive comprennent au moins un retardateur de flamme sans halogène. Ce composé est un agent ignifugeant, qui va permettre d'éviter l'inflammation du ruban.

D'autres additifs peuvent être inclus dans la composition du ruban selon l'invention, et notamment des agents de mise en oeuvre, tels que des agents épaississants, liants, des agents d'étalement, ou encore des agents de contrôle du pH.

Suivant un mode avantageux de réalisation, le ruban selon l'invention comprend en outre une couche primaire d'accrochage située entre le support et la couche de composition adhésive. Cette couche primaire a pour fonction d'augmenter l'adhésion de la composition adhésive sur le support.

Suivant un autre mode de réalisation, la face du ruban sur laquelle sera enduite la couche primaire d'accrochage et la couche d'adhésive sera soumise à un traitement de type Corona entre 34 et 46 dynes/cm. Ce traitement permettra un accrochage encore meilleur de la composition adhésive sur le support.

Suivant un autre mode de réalisation de l'invention, le ruban est enduit, sur sa face opposée à celle comportant la couche d'accrochage et la ou les couches de composition adhésive, d'une couche d'agent anti-adhérent, qui a pour fonction d'améliorer le déroulage du ruban lors de l'utilisation.

Pour les applications automobiles notamment, le ruban selon l'invention, dans son intégralité, support et couches présente une certaine épaisseur, de préférence comprise entre 70 et 150 microns.

Enfin, un autre objet de l'invention est l'utilisation du ruban adhésif selon l'invention pour le gainage d'un faisceau de fils.

### EXEMPLE 1

### Composition du support :

a) 69 % en poids d'un copolymère éthylène/propylène avec un taux d'éthylène de 22 % et un point de fusion de 160 °C
b) 20 % en poids d'un élastomère SEBS/SEB avec un taux de styrène de 13 %
c) 6 % en poids de noir de carbone
d) 5 % en poids d'un antioxydant constitué du mélange pentaérythritol tetrakis(3-(3,5-di-tertiobutyl-4-hydroxyphényl)propionate) avec du distéarylthiodipropionate dans un rapport molaire 1 pour 4.

### Obtention du support

Un support d'une épaisseur d'environ 120 microns (entre 100 et 140) est obtenu à partir de cette formulation par la technique standard d'extrusion soufflage. Une face du support sera traitée corona à un niveau compris entre 42 et 46 dynes.

### Formulation adhésive :

a) 64,5 % en poids d'Ucécryl® WB 1465 commercialisé par la société UCB
b) Additifs : 0.5 % en poids de Lumiten® ISC commercialisé par la société BASF (agent d'étalement), 1.5 % en poids de Nopco® DSX 1514 commercialisé par la société Henkel (agent épaississant), 0.5 % en poids de soude caustique à 30 % (agent de contrôle du pH)
c) 33 % d'eau

La formulation adhésive est enduite sur la face traitée du support à raison de 25 g sec/m2 par une des techniques standard du métier. Après évaporation de l'eau, le produit est enroulé autour d'un axe en carton. Le produit final se présente sous la forme d'un rouleau de largeur et de longueur choisie suivant les applications.

### EXEMPLE 2

### Composition du support :

a) 74 % en poids d'un copolymère éthylène/propylène avec un taux d'éthylène de 22 % et un point de fusion de 160 °C
b) 20 % en poids d'un élastomères SEBS/SEB avec un taux de styrène de 13 %
c) 4,75 % en poids de Noir de Carbone
d) 0,25 % en poids d'un antioxydant primaire le Bis[3,3-bis(4'-hydroxy-3'-tert-butylphényl)-butanaicacide]glycol ester
e) 0,25 % en poids d'un antioxydant secondaire le Tris-(2,4-ditert-butylphényl)-phosphite
f) 0,75 % en poids d'un second antioxydant secondaire le Distéaryl-3,3'-thiodipropionate

### Obtention du support

Un support d'une épaisseur d'environ 85 microns (entre 80 et 100) est obtenu à partir de cette formulation par la technique standard d'extrusion soufflage.

### Formulation adhésive : identique à celle de l'exemple 1

### EXEMPLE 3

### Composition du support :

a) 73 % en poids d'un copolymère éthylène/propylène avec un taux d'éthylène de 22 % et un point de fusion de 160 °C
b) 20 % en poids d'un élastomères SEBS/SEB avec un taux de styrène de 13 %
c) 5 % en poids de Noir de Carbone
d) 0,4 % en poids d'un antioxydant primaire le Bis[3,3-bis(4'-hydroxy-3'-tert-butylphényl)-butanaicacide]glycolester
e) 0,4 % en poids d'un antioxydant secondaire le Tris-(2,4-ditert-butylphényl)-phosphite
f) 1,2 % en poids d'un second antioxydant secondaire le Distéaryl-3,3'-thiodipropionate

### Obtention du support

Un support d'une épaisseur d'environ 140 microns (entre 130 et 150) est obtenu à partir de cette formulation par la technique standard d'extrusion soufflage.

### Formulation adhésive :

a) 63,75 % en poids d'Ucécryl WB 1465
b) Additifs :
   0,5 % en poids de Lumiten® ISC commercialisé par la société BASF (agent d'étalement),
   1,5 % en poids de Nopco DSX 1514 commercialisé par la société Henkel (agent épaississant),
   0,5 % de soude caustique à 30 % (agent de contrôle du pH),
   0,25 % en poids de Bis[3,3-bis(4'-hydroxy-3'-tert-butylphényl) butanaicacide] glycol ester (antioxydant primaire),
   0,25 % en poids de Tris-(2,4-ditert-butylphényl)-phosphite (antioxydant secondaire),
   0,75 % en poids de Distéaryl-3,3'-thiodipropionate (antioxydant secondaire)
   b) 33 % d'eau

## Revendications

1. Ruban adhésif multicouche susceptible de conserver ses propriétés physiques à 125 °C pendant 3000 heures et à 150 °C pendant 240 heures, comprenant une couche de support monocouche ou multicouche sur au moins une surface de laquelle adhère au moins une couche notamment de composition adhésive, **caractérisé en ce que**
ladite couche de support comprend une première résine de polypropylène et/ou d'un copolymère ethylène/propylène et au moins une seconde résine polyéthylène, copolymère de l'éthylène et/ou élastomère, l'une au moins de ces résines étant un élastomère,
ladite résine élastomère est une résine Styrène-Isoprène-Styrène (SIS), une résine Styrène-Ethylène-Butadiène-Styrène (SEBS), une résine Styrène-Ethylène-Butadiène (SEB), une résine Styrène-Ethylène-Butadiène-Styrène/Styrène-Ethylène-Butadiène (SEBS/SEB), une résine Styrène-Butadiène-Styrène (SBS), une résine Ethylène-Propylène-diène-monomère (EPDM) et/ou une résine Caoutchouc Ethylène-Propylène (EPR), et
ladite couche de support et/ou ladite composition adhésive comprennent au moins un stabilisant.

2. Ruban adhésif selon la revendication 1, **caractérisé en ce que** ni ladite couche de support ni ladite couche de composition adhésive ne contiennent pas de composés halogénés.

3. Ruban adhésif selon l'une quelconque des revendications 1 ou 2, **caractérisé en ce que** le taux de monomère éthylène dans ledit copolymère ethylène/propylène, est compris entre 1,5 et 50 %, de préférence entre 5 et 30 % en poids.

4. Ruban adhésif selon l'une quelconque des revendications 1 à 3, **caractérisé en ce que** ladite couche de support contient au moins 60 % et de préférence de 60 à 90 %, très préférentiellement de 65 à 75 % d'une résine de polypropylène et/ou d'un copolymère éthylène/propylène.

5. Ruban adhésif selon l'une quelconque des revendications 1 à 4, **caractérisé en ce que** ledit stabilisant est choisi parmi les stabilisants en température, à l'exclusion des stabilisants non-jaunissant.

6. Ruban adhésif selon l'une quelconque des revendications 1 à 5, **caractérisé en ce que** ledit stabilisant est un antioxydant primaire seul ou en combinaison avec un antioxydant secondaire.

7. Ruban adhésif selon la revendication 6, **caractérisé en ce que** ledit antioxydant primaire est un phénol encombré et/ou une amine encombrée.

8. Ruban adhésif selon l'une quelconque des revendications 6 ou 7, **caractérisé en ce que** ledit antioxydant secondaire est une phosphite organique, ou une phosphinite organique ou une sulfide organique ou un thiocomposé du type dialkyldithiocarbamate ou dialkyldithiophosphate, distéarylthiodipropionate ou un mélange de ceux-ci.

9. Ruban adhésif selon l'une quelconque des revendications 1 à 8, **caractérisé en ce que** ledit stabilisant est un phénol encombré associé à une phosphite ou un thiocomposé.

10. Ruban adhésif selon l'une quelconque des revendications 1 à 9, **caractérisé en ce que** ledit stabilisant comprend en outre un antioxydant haute performance.

11. Ruban adhésif selon l'une quelconque des revendications 1 à 10, **caractérisé en ce que** ladite composition adhésive ne comprend pas de caoutchouc naturel ni synthétique.

12. Ruban adhésif selon l'une quelconque des revendications 1 à 11, **caractérisé en ce que** ladite composition adhésive est sensible à la pression.

13. Ruban adhésif selon l'une quelconque des revendications 1 à 12, **caractérisé en ce que** ladite composition adhésive comprend un adhésif à base acrylique ou un adhésif siliconé.

14. Ruban adhésif selon l'une quelconque des revendications 1 à 13, **caractérisé en ce que** ladite composition adhésive est thermofusible ou thermodurcissable.

15. Ruban adhésif selon l'une quelconque des revendications 1 à 14, **caractérisé en ce que** ladite composition adhésive est réticulable sous l'action des ultra-violets ou d'un bombardement électronique.

16. Ruban adhésif selon l'une quelconque des revendications 1 à 15, **caractérisé en ce** ladite composition adhésive est de type acrylique thermofusible réticulable sous l'action des ultra-violets du type commercialisé par la société BASF sous les noms acResin® ou un adhésif en solution du type commercialisé par la société UCB sous les noms Solucryl® ou du type commercialisé par la société ASHLAND sous les noms AROSET® ou du type commercialisé par la société NATIONAL STARCH CHEMICAL COMPANY sous les noms DUROTAR® ou un adhésif en émulsion du type commercialisé par la société UCB sous les noms Ucecryl® ou du type commercialisé par la société RHOM&HAAS sous les noms Primal® ou du type commercialisé par la société SOLUTIA sous les noms Gelva® GME.

17. Ruban adhésif selon l'une quelconque des revendications 1 à 16, **caractérisé en ce que** ladite composition adhésive est modifiée par une résine tackifiante, la teneur en résine tackifiante étant inférieure à 30% en poids par rapport au poids de la composition adhésive, et de préférence inférieure à 20% en poids par rapport au poids de la composition adhésive.

18. Ruban adhésif selon l'une quelconque des revendications 1 à 17, **caractérisé en ce que** ledit support et/ou ladite composition adhésive comprennent des colorants ou des pigments de préférence minéraux, de préférence du noir de carbone, de l'oxyde de zinc, de l'oxyde de magnésium ou de l'oxyde de titane et/ou des charges, de préférence du carbonate de calcium ou du talc.

19. Ruban adhésif selon l'une quelconque des revendications 1 à 18, **caractérisé en ce que** ledit support et/ou ladite composition adhésive comprennent au moins un retardateur de flamme sans halogène.

20. Ruban adhésif selon la revendication 19, **caractérisé en ce que** ledit retardateur de flamme sans halogène est du trihydrate d'alumine, du borate de zinc, de l'hydroxyde de magnésium, un polyphosphate organique, un polyphosphate d'ammonium, et/ou un dérivé de triazine.

21. Ruban adhésif selon l'une quelconque des revendications 1 à 20, **caractérisé en ce qu'**il comprend une couche primaire d'accrochage située entre ledit support et ladite couche de composition adhésive.

22. Ruban adhésif selon l'une quelconque des revendications 1 à 21, **caractérisé en ce qu'**il comprend une couche primaire d'agent anti-adhérent sur la face du support opposée à celle enduite avec la couche primaire d'accrochage et/ou avec la ou les couches de composition adhésive.

23. Ruban adhésif selon l'une quelconque des revendications 1 à 22, **caractérisé en ce que** l'une au moins des faces du support est soumise à un traitement de surface de type Corona entre 34 et 46 dynes/cm préalablement à l'enduction de la couche d'agent anti-adhérent, de la couche primaire d'accrochage, et/ou de la ou des couches de composition adhésive.

24. Ruban adhésif selon l'une quelconque des revendications 1 à 23, **caractérisé en ce que** son épaisseur est comprise entre 50 et 200 microns, de préférence 60 et 180 microns et de manière encore davantage préférée entre 70 et 150 microns.

25. Utilisation du ruban adhésif selon l'une quelconque des revendications 1 à 24, **caractérisé en ce que** l'on gaine un faisceau de fils avec ledit ruban.

## Claims

1. Multilayer adhesive strip capable of preserving its physical properties at 125 °C for 3000 hours and at 150 °C for 240 hours, comprising one mono- or multilayer support layer, on at least one surface, of which adheres at least one layer, in particular an adhesive composition layer, **characterized in that** said support layer comprises a first polypropylene resin and/or an ethylene/propylene copolymer and at least one second polyethylene resin, an ethylene and/or elastomer copolymer, with at least one of these resins being an elastomer,
wherein said elastomer resin is a styrene-isoprenestyrene (SIS) resin, a styrene-ethylene-butadiene-styrene (SEBS) resin, a styrene-ethylene-butadiene (SEB) resin, a styrene-ethylene-butadiene-styrene/ styrene-ethylene-butadiene (SEB/SEB) resin, a styrenebutadiene-styrene (SBS) resin, an ethylene-propylenediene-monomer (EPDM) resin, and/or an ethylenepropylene rubber (EPR) resin, and
said support layer and/or said adhesive composition include at least one stabilizer.

2. Adhesive strip according to claim 1, **characterized in that** neither said support layer nor said adhesive composition contains halogenated compounds.

3. Adhesive strip according to either one of claims 1 or 2, **characterized in that** the ethylene monomer level in said ethylene/propylene copolymer is between 1.5 and 50 %, and preferably between 5 and 30 % by weight.

4. Adhesive strip according to any one of claims 1 to 3, **characterized in that** said support layer contains at least 60 % and preferably 60 to 90 %, and very preferably 65 to 75 % of a polypropylene resin and/or an ethylene/propylene copolymer.

5. Adhesive strip according to any one of claims 1 to 4, **characterized in that** said stabilizer is chosen from the temperature stabilizers, with the exclusion of non-yellowing stabilizers.

6. Adhesive strip according to any one of claims 1 to 5, **characterized in that** said stabilizer is a primary antioxidant alone or in combination with a secondary antioxidant.

7. Adhesive strip according to claim 6, **characterized in that** said primary antioxidant is a hindered phenol and/or a hindered amine.

8. Adhesive strip according to either one of claims 6 or 7, **characterized in that** said secondary antioxidant is an organic phosphite, or an organic phosphinite or an organic sulfide or a dialkyldithiocarbamate or dialkyldithiophosphate, distearylthiodipropionate thiocompound or a mixture thereof.

9. Adhesive strip according to any one of claims 1 to 8, **characterized in that** said stabilizer is a hindered phenol associated with a phosphite or a thiocompound.

10. Adhesive strip according to any one of claims 1 to 9, **characterized in that** said stabilizer also comprises a high-performance antioxidant.

11. Adhesive strip according to any one of claims 1 to 10, **characterized in that** said adhesive composition does not include natural or synthetic rubber.

12. Adhesive strip according to any one of claims 1 to 11, **characterized in that** said adhesive composition is sensitive to pressure.

13. Adhesive strip according to any one of claims 1 to 12, **characterized in that** said adhesive composition comprises an acrylic-based adhesive or a silicone adhesive.

14. Adhesive strip according to any one of claims 1 to 13, **characterized in that** said adhesive composition is thermofusible or thermosetting.

15. Adhesive strip according to any one of claims 1 to 14, **characterized in that** said adhesive composition is cross-linkable under ultraviolet radiation or electron impact.

16. Adhesive strip according to any one of claims 1 to 15, **characterized in that** said adhesive composition is of the thermofusible acrylic type cross-linkable under ultraviolet radiation, of the type sold by the BASF company under the name acResin® or an adhesive in solution of the type sold by the UCB company under the name Solucryl® or of the type sold by the ASHLAND company under the name AROSET® or of the type sold by the NATIONAL STARCH CHEMICAL COMPANY under the name DUROTAK® or an adhesive in emulsion of the type sold by the UCB company under the name Ucecryl® or of the type sold by the RHOM&HAAS company under the name Primal® or of the type sold by the SOLUTIA company under the name Gelva® GME.

17. Adhesive strip according to any one of claims 1 to 16, **characterized in that** said adhesive composition is modified by a tacky resin, with the tacky resin content being lower than 30 % by weight with respect to the weight of the adhesive composition, and preferably below 20 % by weight with respect to the weight of the adhesive composition.

18. Adhesive strip according to any one of claims 1 to 17, **characterized in that** said support and/or said adhesive composition include preferably inorganic dyes or pigments, preferably carbon black, zinc oxide, magnesium oxide or titanium oxide and/or fillers, preferably calcium carbonate or talc.

19. Adhesive strip according to any one of claims 1 to 18, **characterized in that** said support and/or said adhesive composition include at least one halogen-free flame retardant.

20. Adhesive strip according to claim 19, **characterized in that** said halogen-free flame retardant is alumina trihydrate, zinc borate, magnesium hydroxide, an organic polyphosphate, an ammonium polyphosphate, and/or a triazine derivative.

21. Adhesive strip according to any one of claims 1 to 20, **characterized in that** it comprises a primer tie layer located between said support and said adhesive composition layer.

22. Adhesive strip according to any one of claims 1 to 21, **characterized in that** it comprises an anti-adhesive primer layer on the face of the support opposite that coated with the primer tie layer and/or with the adhesive composition layer(s).

23. Adhesive strip according to any one of claims 1 to 22, **characterized in that** at least one of the faces of the support is subjected to a Corona-type surface treatment of between 34 and 46 dynes/cm prior to the coating with the anti-adhesive layer, the primer tie layer and/or the adhesive composition layer(s).

24. Adhesive strip according to any one of claims 1 to 23, **characterized in that** its thickness is between 50 and 200 microns, preferably 60 and 180 microns and even more preferably between 70 and 150 microns.

25. Use of the adhesive strip according to any one of claims 1 to 24, **characterized in that** said strip forms a sheath for a wire bundle.

## Patentansprüche

1. Mehrschichtiges Klebeband, das seine physikalischen Eigenschaften bei 125 °C während 3000 Stunden und bei 150 °C während 240 Stunden beibehalten kann und das eine einschichtige oder mehrschichtige Trägerschicht auf mindestens einer Oberfläche umfasst, auf der mindestens eine Schicht aus insbesondere Klebstoff haftet, **dadurch gekennzeichnet, dass**
die besagte Trägerschicht ein erstes Polypropylenharz und/oder Ethylen-Propylen-Copolymer-Harz und mindestens ein zweites Polyethylenharz, Ethylen-Copolymer-Harz und/oder Elastomerharz umfasst, wobei es sich bei mindestens einem dieser Harze ein Elastomer handelt,
das besagte Elastomerharz um ein Styrol-Isopren-Styrol-Harz (SIS-Harz), ein Styrol-Ethylen-Butadien-Styrol-Harz (SEBS-Harz), ein Styrol-Ethylen-Butadien-Harz (SEB-Harz), ein Styrol-Ethylen-Butadien-Styrol/Styrol-Ethylen-Butadien-Harz (SEBS/SEB-Harz), ein StyrolButadien-Styrol-Harz (SBS-Harz), ein Ethylen-Propylen-Dien-Monomer-Harz (EPDM-Harz) und/oder ein Ethylen-Propylen-Kautschuk-Harz (EPR-Harz) ist, und
die besagte Trägerschicht und/oder der besagte Klebstoff mindestens einen Stabilisator umfassen.

2. Klebeband nach Anspruch 1, **dadurch gekennzeichnet, dass** weder die besagte Trägerschicht noch die Klebstoffschicht Halogenverbindungen enthalten.

3. Klebeband nach einem der Ansprüche 1 oder 2, **dadurch gekennzeichnet, dass** der Prozentsatz des Ethylen-Monomers in dem besagten Ethylen-Propylen-Copolymer zwischen 1,5 und 50 Gew.-%, vorzugsweise zwischen 5 und 30 Gew.-% liegt.

4. Klebeband nach einem der Ansprüche 1 bis 3, **dadurch gekennzeichnet, dass** die besagte Trägerschicht mindestens 60 % und vorzugsweise von 60 bis 90 %, mehr bevorzugt von 65 bis 75 % von einem Polypropylenharz und/oder einem Ethylen-Propylen-Copolymer enthält.

5. Klebeband nach einem der Ansprüche 1 bis 4, **dadurch gekennzeichnet, dass** der besagte Stabilisator aus den Temperaturstabilisatoren mit Ausnahme von Vergilbungsstabilisatoren ausgewählt ist.

6. Klebeband nach einem der Ansprüche 1 bis 5, **dadurch gekennzeichnet, dass** es sich bei dem besagten Stabilisator um ein erstes Antioxidans für sich oder in Kombination mit einem zweiten Antioxidans handelt.

7. Klebeband nach Anspruch 6, **dadurch gekennzeichnet, dass** es sich bei dem besagten ersten Antioxidans um ein gehindertes Phenol und/oder ein gehindertes Amin handelt.

8. Klebeband nach einem der Ansprüche 6 oder 7, **dadurch gekennzeichnet, dass** es sich bei dem besagten zweiten Antioxidans um ein Organophosphit oder ein Organophosphinit oder ein Organosulfid oder eine Thioverbindung vom Typ Dialkyldithiocarbamat oder Dialkyldithiophosphat, Distearylthiodipropionat oder eine Mischung dieser handelt.

9. Klebeband nach einem der Ansprüche 1 bis 8, **dadurch gekennzeichnet, dass** es sich bei dem besagten Stabilisator um gehindertes Phenol, das mit einem Phosphit oder einer Thioverbindung verbunden ist, handelt.

10. Klebeband nach einem der Ansprüche 1 bis 9, **dadurch gekennzeichnet, dass** der besagte Stabilisator außerdem ein hochleistungsfähiges Antioxidans umfasst.

11. Klebeband nach einem der Ansprüche 1 bis 10, **dadurch gekennzeichnet, dass** der besagte Klebstoff weder Naturkautschuk noch synthetischen Kautschuk umfasst.

12. Klebeband nach einem der Ansprüche 1 bis 11, **dadurch gekennzeichnet, dass** es sich bei dem besagten Klebstoff um einen Haftklebstoff handelt.

13. Klebeband nach einem der Ansprüche 1 bis 12, **dadurch gekennzeichnet, dass** der besagte Klebstoff einen Klebstoff auf Acrylbasis oder einen Silikonklebstoff umfasst.

14. Klebeband nach einem der Ansprüche 1 bis 13, **dadurch gekennzeichnet, dass** es sich bei dem besagten Klebstoff um einen Hotmelt oder einen Duroplast handelt.

15. Klebeband nach einem der Ansprüche 1 bis 14, **dadurch gekennzeichnet, dass** der besagte Klebstoff mittels Einwirkung von Ultraviolettstrahlen oder eines Elektronenbeschusses gehärtet werden kann.

16. Klebeband nach einem der Ansprüche 1 bis 15, **dadurch gekennzeichnet, dass** der besagte Klebstoff vom Acryltyp, der mittels Einwirkung von Ultraviolettstrahlen gehärtet und vernetzt wird, und von jenem Typ, der von dem Unternehmen BASF unter den Namen acResin® vertrieben wird, oder eine Klebelösung von jenem Typ, der von dem Unternehmen UCB unter den Namen Solucryl® vertrieben wird, oder von jenem Typ, der von dem Unternehmen ASHLAND unter den Namen AROSET® vertrieben wird, oder von jenem Typ, der von dem Unternehmen NATIONAL STARCH CHEMICAL COMPANY unter den Namen DUROTAK® vertrieben wird, oder eine Klebeemulsion von jenem Typ, der von dem Unternehmen UCB unter den Namen Ucecryl® vertrieben wird, oder von jenem Typ, der von dem Unternehmen ROHM & HAAS unter den Namen Primat® vertrieben wird, oder von jenem Typ, der von dem Unternehmen SOLUTIA unter den Namen Gelva® GME vertrieben wird, ist.

17. Klebeband nach einem der Ansprüche 1 bis 16, **dadurch gekennzeichnet, dass** der besagte Klebstoff mit einem die Haftung verbessernden Harz modifiziert wird, wobei der Anteil an die Haftung verbesserndem Harz im Verhältnis zum Gewicht des Klebstoffs weniger als 30 Gew.-% und vorzugsweise im Verhältnis zum Gewicht des Klebstoffs weniger als 20 Gew.-% ausmacht.

18. Klebeband nach einem der Ansprüche 1 bis 17, **dadurch gekennzeichnet, dass** der besagte Träger und/oder der Klebstoff Farbstoffe oder Pigmente, die vorzugsweise anorganisch sind, vorzugsweise Ruß, Zinkoxid, Magnesiumoxid oder Titanoxid, und/oder Füllstoffe, vorzugsweise Calciumcarbonat oder Talkum, umfassen.

19. Klebeband nach einem der Ansprüche 1 bis 18, **dadurch gekennzeichnet, dass** der besagte Träger und/oder der Klebstoff mindestens ein halogenfreies Flammenverzögerungsmittel umfassen.

20. Klebeband nach Anspruch 19, **dadurch gekennzeichnet, dass** das besagte halogenfreie Flammenverzögerungsmittel Aluminiumtrihydrat, Zinkborat, Magnesiumhydroxid, ein organisches Polyphosphat, ein Ammoniumpolyphosphat und/oder ein Triazinderivat ist.

21. Klebeband nach einem der Ansprüche 1 bis 20, **dadurch gekennzeichnet, dass** es eine erste Haftschicht umfasst, die zwischen dem besagten Träger und dem besagten Klebstoff angeordnet ist.

22. Klebeband nach einem der Ansprüche 1 bis 21, **dadurch gekennzeichnet, dass** es auf der Fläche des Trägers, die der Seite gegenüberliegt, die mit der ersten Haftschicht und/oder mit der Klebstoffschicht oder den Klebstoffschichten beschichtet ist, eine erste Antihaftschicht umfasst.

23. Klebeband nach einem der Ansprüche 1 bis 22, **dadurch gekennzeichnet, dass** mindestens eine der Flächen des Trägers vor dem Auftragen der Antihaftschicht, der ersten Haftschicht und/oder der Klebstoffschicht oder den Klebstoffschichten einer Oberflächenbehandlung vom Koronatyp zwischen 34 und 46 Dyn/cm unterzogen wird.

24. Klebeband nach einem der Ansprüche 1 bis 23, **dadurch gekennzeichnet, dass** seine Dicke zwischen 50 und 200 Mikron, vorzugsweise zwischen 60 und 180 Mikron und besonders bevorzugt zwischen 70 und 150 Mikron liegt.

25. Verwendung des Klebebandes nach einem der Ansprüche 1 bis 24, **dadurch gekennzeichnet, dass** mit dem Band ein Kabelbündel umwickelt wird.
